# EUROPÄISCHE PATENTANMELDUNG

(11) **EP 1 034 977 A1**
(43) Veröffentlichungstag der Anmeldung: **13.09.2000**
(21) Anmeldenummer: 00104244.9
(22) Anmeldetag: 02.03.2000
(51) Int. Cl.: B60P 7/06

(54) **Vorrichtung zur Ladungssicherung**

(30) Priorität: 05.03.1999 DE 19909633
(71) Anmelder: Stegink, Hermann, 49842 Emlichheim (DE); Suchowierz, Erwin, 49824 Ringe (DE)
(72) Erfinder: Stegink, Hermann, 49842 Emlichheim (DE); Suchowierz, Erwin, 49824 Ringe (DE)
(74) Vertreter: Busse & Busse Patentanwälte

(57) **Zusammenfassung**

Die Erfindung bezieht sich auf eine Vorrichtung (1) zur Ladungssicherung, insbesondere zur Sicherung von Ladegut auf Nutzfahrzeugen, mit zumindest einem um das Ladungsgut anzuordnenden Befestigungsmittel (2, 3), beispielsweise einen Zurrgurt, einer Rahmenkonstruktion der dergleichen. Um die Vorrichtung hinsichtlich Ihrer Sicherungseigenschaften gegenüber herkömmlichen Vorrichtungen erheblich verbessert zu haben, ist an dem Befestigungsmittel ein zumindest bereichsweise entlang diesem beweglicher, formveränderbarer expandierender Körper (beispielsweise ein druckbeaufschlagtes Luftkissen), (Fig. 1) befestigbar.

## Beschreibung

Die Erfindung bezieht sich auf eine Vorrichtung zur Ladungseicherung, insbesondere zur Sicherung von Ladegut auf Nutzfahrzeugen, mit zumindest einem um das Ladegut zu legenden Befestigungsmittel, beispielsweise einem Zurrgurt, einer Rahmenkonstruktion oder dergleichen.

Vorrichtungen zur Ladungssicherung haben überlicherweise mehrere Zurrgurte, die um das Ladegut geschlungen und an Befestigungsanschlüssen von Aufbauten von z. B. Nutzfahrzeugen zu befestigen und danach mit dem Ladegut zu verzurren sind. Die von den Verzurrgurten auf das Ladegut einwirkenden Befestigungskräfte sind allerdings in der eigentlich erforderlichen Spannrichtung gering, so daß insbesondere bei der Beförderung von schweren Teilen wie beispielsweise Betonfertigteilen auf üblichen Sattelaufliegern in Folge z. B. zu geringer Reibkräfte bei Bremsvorgängen und Kurvenfahrten die große Gefahr besteht, daß das Ladegut aufgrund einhergehender Beschleunigungskräfte durch die Zurrgurte nicht mehr sicher auf der Ladefläche gehalten werden kann. Das damit einhergehende Unfall- und Verletzungsrisiko ist erheblich.
Der Erfindung liegt die Aufgabe zugrunde, eine Vorrichtung zur Ladungssicherung der eingangs genannten Art zu schaffen, bei der mit baulich einfachen Mitteln die Ladungssicherung erheblich zu verbessern ist.

Zur Lösung dieser Aufgabe zeichnet sich die Vorrichtung zur Ladungssicherung der eingangs genannten Art dadurch aus, daß dem Befestigungsmittel ein zumindest bereichsweise entlang des Befestigungsmittels beweglicher, formveränderbarer expandierender Körper zugeordnet ist.

Mit einem solchen formveränderbaren expandierenden Körper lassen sich die mittels der Befestigungsvorrichtung auf das Ladegut einwirkenden Befestigungs- bzw. Haltekräfte (Reibkräfte) im Zusammenwirken mit dem Befestigungsmittel, beispielsweise einem Verzurrgurt, derart erhöhen, daß in den meisten Anwendungsfällen eine sichere Befestigung auch von schwerem Ladegut zu bewerkstelligen ist. Der expandierende Körper ist bevorzugtermaßen als druckbeaufschlagte Sicherungskissen ausgebildet.

Aufgrund der beweglichen Führung des expandierenden Körpers an dem Befestigungsmittel läßt sich z. B. ein Sicherungskissen exakt an die Stelle bringen, an der die Halte- bzw. Befestigungskräfte auf das Ladegut aufgebracht werden sollen. Aufgrund der Formveränderbarkeit paßt sich nach Beaufschlagung des Sicherungskissens mit einem Druckmedium dieses exakt der Kontur des Ladesgutes an. So lassen sich beispielsweise auch Hohlräume zwischen gestapelten Rohren, Papierrollen, die von einem Gurt umgriffen sind, genauso ausfüllen bzw. umgreifen wie beispielsweise auch dreieckförmig gestaltete, vorragende Plattenteile oder Profile. Ein z. B. Sicherungskissen kann durch den Verzurrgurt gehalten werden, so daß die von dem Sicherungskissen aufzubringenden Haltekräfte orthogonal zu dem Ladegut angreifen können.

Das Sicherungskissen ist ein mit nur geringem Aufwand herzustellendes Teil, das auch in einfacher Weise so ausgebildet sein kann, daß es lösbar mit dem Befestigungsmittel zu verbinden ist. Dadurch lassen sich auch herkömmliche und übliche Verzurrgurte in einfacher Weise mit einem System gemäß der Erfindung ausrüsten, und zwar mit einem nur geringe Kosten verursachenden Aufwand, so daß auch bei herkömmlichen verzurrgurten eine nachhaltige Sicherungsverbesserung zu vollziehen ist.

Bevorzugterweise ist das Sicherungskissen mehrteilig ausgebildet und hat z. B. zwecks Herbeiführung eines guten Reibschlusses einen formunveränderbaren Bereich aus z. B. einem Hartgummibereich, der zudem auch noch der Kontur von zu transportierenden Gegenständen anzupassen ist, um für eine bestmögliche Sicherung Sorge tragen zu können.

Auf alle Fälle ist jedoch mit der Vorrichtung ein Sicherungssystem geschaffen, bei dem über die beweglichen Sicherungskissen und über den Verzurrgurt und das Druckmedium Haltekräfte genau derort einzuleiten sind, daß optimale Befestigungskräfte (z. B. Reibkräfte) wirken.

Weitere Einzelheiten und Vorteile ergeben sich aus den weiteren Ansprüchen der nachfolgenden Beschreibung und der Zeichnung.

In der Zeichnung zeigen:
Fig. 1 ein erstes Ausführungsbeispiel der Erfindung in einer schematischen Perspektivdarstellung,
Fig. 2 ein alternatives Ausführungsbeispiel der Vorrichtung nach der Erfindung.

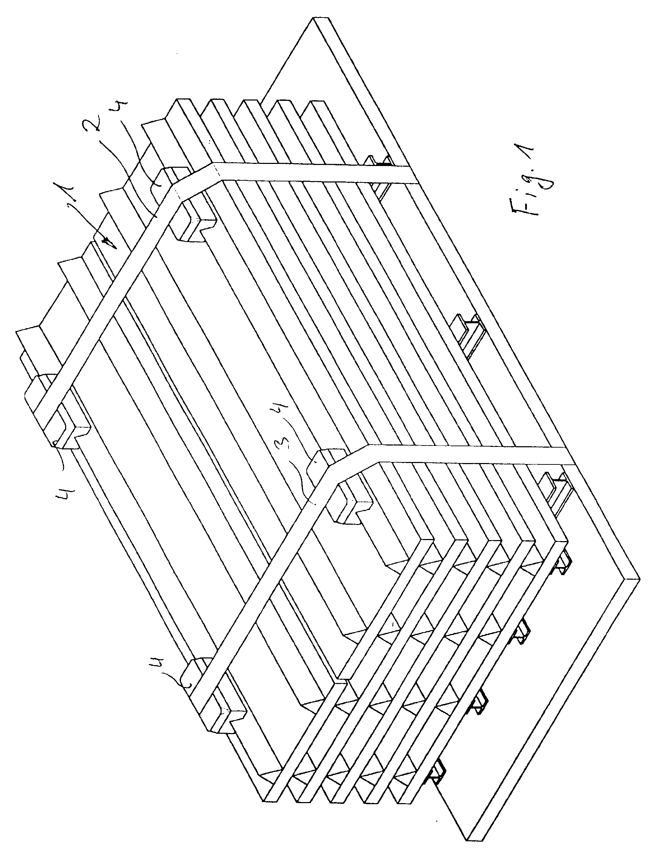

Die in der Zeichnung allgemein mit 1 bezifferte Vorrichtung zur Ladungssicherung dient in dem dargestellten Ausführungsbeispiel nach Fig. 1 zur Sicherung von übereinander gestapelten plattenförmigen Elementen mit dreieckförmiger Stegprofilierung. Diese sind auf einem Aufbau eines Nutzfahrzeuges, einer Palette, eines Zugwagons oder dergleichen gestapelt und über die erfindungsgemäße Vorrichtung 1 zur Ladungssicherung befestigt. Dazu hat die Vorrichtung 1 im gezeigten Ausführungsbeispiel nach Fig. 1 zwei Verzurrgurte (2) und insgesamt vier Sicherungskissen (4), die - wie ersichtlich - auf einer dreieckförmigen Stegprofilierung in vorderen und hinteren Seitenbereichen der Oberseite der Stapelgüter angeordnet und von den beiden Verzurrgurten (2 und 3) umschlungen sind. Diese sind entlang der Verzurrgurte beweglich und könnten beispielsweise auch ohne größere Schwierigkeiten in andere Bereiche überführt werden, falls dort Halteaufgaben zu übernehmen sind.

Zusätzlich können selbstverständlich auch noch weitere Kissen, sei es im oberen Bereich oder aber auch in Seitenbereichen des Stapels Güter vorgesehen werden. Die Sicherungskissen können lose unter den Verzurrgurten gelegt sein. Es besteht selbstverständlich auch die Möglichkeit, die Kissen mit entsprechenden Schlitzführungsschlaufen und dergleichen Anschlußelementen zu versehen, um z. B. den Verzurrgurt durch diese hindurchzufädeln.

Die Kissen selber bestehen in dem gezeigtem Ausführungsbeispiel aus zwei Bereichen, nämlich einem oberen aufblasbaren Bereich und einem unteren Befestigungsbereich, der Kontur der dreieckförmigen Stegprofilierung (bereichsweise) angepaßt ist und z. B. aus einem Hartgummimaterial zwecks Herbeiführung eines optimalen Reibschlusses besteht. Außerdem kann durch die Kontur eine zusätzliche Sicherung durch Formschluß erreicht werden.

Die Sicherungskissen sind z. B. mit Luft aufzublasen, nachdem der Verzurrgurt um sie und den Stapel sowie die Ladefläche oder entsprechende Anschlußbefestigungselemente gebracht ist. Nach Aufblasen der Sicherungskissen und entsprechender Formveränderung werden die Haltekräfte im Ausführungsbeispiel nach Figur 1 senkrecht von oben auf den Stapel Güter aufgebracht, womit maximale Reibkräfte erreicht werden.

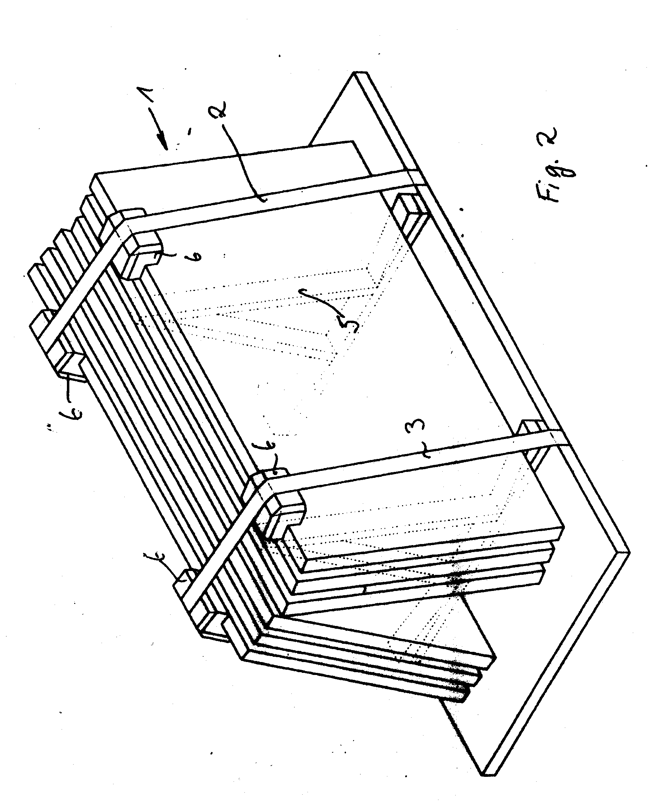

In dem Ausführungsbeispiel nach Fig. 2 sind bei gleichlautender Bezifferung gleichwirkender Teile insgesamt sechs Plattenelemente auf einer Auflagefläche zu sichern, die an einer gestrichelt angedeuteten Gestell anliegen. Das Gestell trägt die Bezugsziffer 5. Die Vorrichtung zur Ladungssicherung (1) weist wiederum zwei Verzurrgurte (2 und 3) und insgesamt vier Sicherungskissen (6) auf.

In dem gezeigten zweiten Ausführungsbeispiel sind die formveränderbaren Teile der Kissen (6) einmal oben und einmal an der Seite mit einem diagonalen Zwischenbereich angelegt. Den zu haltenden Plattenelementen zugewandt ist ein winkelförmig ausgebildeter Befestigungsbereich, der wiederum aus einem Hartgummimaterial besteht. Hier werden die Sicherungkräfte wiederum von oben aber auch seitlich, d. h. auch schräg auf die zu haltenden Platten aufgebracht, nachdem die Sicherungskissen mit Luft aufgeblasen worden sind. Die Sicherungskissen können auch über eine zentrale Versorgung mit einem Druckmedium beaufschlagt werden. Als Druckmedium kommt neben Luft selbstverständlich auch z. B. ein hydraulisches Medium in Betracht.

## Patentansprüche

1. Vorrichtung zur Ladungssicherung, insbesondere zur Sicherung von Ladegut auf Nutzfahrzeugen, mit zumindest einem um das Ladegut anzuordnenden Befestigungsmittel (2, 3), beispielsweise einem Zurrgurt, einer Rahmenkonstruktion oder dergleichen, **dadurch gekennzeichnet**, daß dem Befestigungsmittel (2, 3) ein zumindest bereichsweise an diesem entlangbeweglicher formveränderbarer expandierender Körper (4) zugeordnet ist.

2. Vorrichtung nach Anspruch 1, dadurch gekennzeichnet, daß der expandierende Körper als druckbeaufschlagtes Sicherungskissen 4 ausgebildet ist.

3. Vorrichtung nach Anspruch 2, dadurch gekennzeichnet, daß das Sicherungskissen (4) als mit Druckluft aufblasbares und/entlüftbares Kissen ausgebildet ist.

4. Vorrichtung nach Anspruch 2 oder 3, dadurch gekennzeichnet, daß das Sicherungskissen (4) als hydraulisches Sicherungskissen ausgebildet ist.

5. Vorrichtung nach einem der Ansprüche 1 bis 4,dadurch gekennzeichnet, daß diese zwei oder mehrere Befestigungsmittel (2, 3) sowie zwei oder mehrere expandierende Körper aufweist, wobei die expandierenden Körper von einer Zentralversorgung mit dem Druckmedium beaufschlagbar sind.

6. Vorrichtung nach einem der Ansprüche 1 bis 4, dadurch gekennzeichnet, daß die expandierenden Körper zweiteilig ausgebildet sind mit einem formveränderbaren Bereich und einem an dem Ladegut anzulegenden Befestigungsbereich.

7. Vorrichtung nach Anspruch 6, dadurch gekennzeichnet, daß der Befestigungsbereich aus einem formunveränderbaren Material besteht.

8. Vorrichtung nach Anspruch 7, dadurch gekennzeichnet, daß der Befestigungsbereich kongruent zu einer Kontur eines Ladungsgutbereiches ausgebildet ist.

9. Vorrichtung nach einem der Ansprüche 6 bis 8, dadurch gekennzeichnet, daß der Befestigungsbereich aus einem Hartgummimaterial besteht.

10. Vorrichtung nach einem der Ansprüche 1 bis 9, dadurch gekennzeichnet, daß die expandierenden Körper lösbar mit dem Befestigungsmittel (2, 3) verbunden sind.

11. Vorrichtung nach einem der Ansprüche 1 bis 10, dadurch gekennzeichnet, daß die expandierenden Körper eine Führung zur Anordnung des Befestigungsmittels (2, 3) aufweisen.

12. Vorrichtung nach einem der Ansprüche 1 bis 11, dadurch gekennzeichnet, daß die expandierenden Körper Schlaufen oder Einführungsschlitze zur Durchführung der Befestigungsmittel (2, 3) haben.
